# EUROPÄISCHE PATENTANMELDUNG

(11) **EP 0 887 311 A2**
(43) Veröffentlichungstag der Anmeldung: **30.12.1998**
(21) Anmeldenummer: 98110884.8
(22) Anmeldetag: 15.06.1998
(51) Int. Cl.: C02F 1/42

(54) **Behälter für Wasserfilter**

(30) Priorität: 23.06.1997 DE 29710906 U
(71) Anmelder: USF Deutschland GmbH, 56235 Ransbach-Baumbach (DE)
(72) Erfinder: Messerschmitt, Erich, 65527 Niedernhausen (DE)
(74) Vertreter: Jochem, Bernd, Dipl.-Wirtsch.-Ing.

(57) **Zusammenfassung**

Ein Behälter besitzt einen zylindrischen Innenbehälter (14), der eine wasserdurchflutete Reinigungsstufe einer Wasseraufbereitungsanlage enthält und von einer geschäumten Ummantelung (12) umgeben ist. Behälter mit runder Ummantelung sind ungünstig zu handhaben und müssen stehend transportiert werden. Beschriftungen sind schlecht abzulesen und Anzeigeinstrumente kaum anzubringen. Um die Handhabung zu verbessern, wird vorgeschlagen, daß die Ummantelung (12) am Umfang eine im wesentlichen planflächige Stirnwand (18) besitzt und den Innenbehälter (14) im übrigen mit einer im Querschnitt im wesentlichen hufeisenförmigen Wandung (20) umschließt. Die plane Stirnfläche erlaubt ein sicheres Ablegen des Behälters und das Anbringen von Instrumenten, während der abgerundete hintere Bereich den Platzbedarf gering hält.

## Beschreibung

Die Erfindung befaßt sich mit einem Behälter mit einem zylindrischen Innenbehälter, der eine wasserdurchflutete Reinigungsstufe einer Wasseraufbereitungsanlage enthält und von einer geschäumten Ummantelung umgeben ist.

Derartige Behälter können beispielsweise eine Ionenaustauscherstufe oder mechanische Filter enthalten, oder mit Aktivkohle oder sonstigen Agentien zur Wasseraufbereitung befüllt sein. Die runde Form des Innenbehälters, der z. B. z.B. aus GFK, Polyamid, anderen Kunststoffen oder Edelstahl bestehen kann, ist wegen des verbesserten Fließverhaltens des Wassers zu bevorzugen. Innenbehälter mit Kanten werden in den Randbereichen nur unzureichend durchströmt.

Es sind bereits Behälter bekannt, deren Innenbehälter eine runde Ummantelung besitzen. Runde Behälter sind jedoch ungünstig in ihrer Handhabung. Da die Reinigungsstufen regelmäßig neu befüllt oder gewartet werden müssen, ist es erforderlich, sie von der Wasseraufbereitungsanlage zu trennen und zu transportieren. Da runde Behälter liegend keinen Halt finden, muß der Transport stehend erfolgen, womit jedoch die Gefahr eines Umkippens mit einer daraus resultierenden Beschädigung des Behälters einhergeht. Insbesondere beim innerbetrieblichen Transport von der Wasseraufbereitungsanlage zu einem Lieferwagen und umgekehrt besteht oft keine Möglichkeit, den Behälter an den dazu meist verwendeten Handwägelchen festzuzurren.

Ein weiterer Nachteil runder Ummantelungen besteht darin, daß Beschriftungen schlecht abzulesen und Anzeigeinstrumente nur schwer anzubringen sind. Diese Instrumente geben beispielsweise Auskunft über den elektrischen Innenwiderstand der Filterstufe, der ein Maß für ihren Zustand ist. Die wegen ihres niedrigen Stromverbrauchs bevorzugten Flüssigkristallanzeigen sind jedoch grundsätzlich planflächig. Sie müßten entweder auf der Oberseite des Behälters befestigt werden, was eine schlechte Ablesbarkeit zur Folge hätte, oder sie müßten in einem gesonderten Rahmen von vorne auf den runden Behälter aufgesetzt werden. Dies würde die Gefahr einer Beschädigung beim Transport erheblich erhöhen.

Weiterhin sind Behälter mit achteckiger Ummantelung bekannt, die jedoch die vorstehend genannten Probleme nicht zu lösen vermag. Die acht Seitenflächen sind nämlich zu schmal, um ein Wegrollen des Behälters beim Transport zu verhindern oder eine ausreichend breite Fläche für Anzeigeninstrumente und eine weithin sichtbare Beschriftung zu bieten.

Die Aufgabe der Erfindung besteht darin, einen Behälter der eingangs beschriebenen Art in seiner Handhabung zu verbessern.

Erfindungsgemäß wird die Aufgabe dadurch gelöst, daß die Ummantelung am Umfang eine im wesentlichen planflächige Stirnwand besitzt und den Innenbehälter im übrigen mit einer im Querschnitt im wesentlichen hufeisenförmigen Wandung umschließt.

Damit ergeben sich Vorteile in der Handhabung des Behälters. Zum einen können Anzeigeinstrumente, z.B. mit Flüssigkristallanzeigen, problemlos in die Stirnfläche integriert und auch aus schrägen Blickwinkeln leicht abgelesen werden. Der Transport des Behälters wird insbesondere auf kurzen Strecken erheblich erleichtert, da lediglich mit seiner flachen Stirnfläche auf den Boden eines Wagens gelegt zu werden braucht. Ein umständliches Festzurren des Behälters ist nicht erforderlich.

Durch die rückseitigen Abrundungen der Hufeisenform halten sich das Gewicht und der Platzbedarf des Behälters trotz der breiten Stirnfläche in Grenzen. Er bietet auch optisch eine schlanke Erscheinung.

Zweckmäßigerweise ist die plane Stirnfläche nach oben verlängert und dient als Rahmen für Anzeigeninstrumente. Eine leichte Neigung des Rahmens für das Anzeigeninstrument nach hinten verbessert dessen Ablesbarkeit.

Vorzugsweise ist im Bereich der Oberkante des Rahmens ein dem Ummantelungsquerschnitt entsprechender hufeisenförmiger Griff angeformt. Er kann an einer Stelle eine Lücke zum seitlichen Durchführen von Schläuchen haben, die an eine oben auf einer Öffnung des Innenbehälters sitzende Armatur anschließbar sind, die von dem umlaufenden Griff umgeben und dadurch geschützt ist. Er schützt die empfindliche Armatur vor Schlägen, beispielsweise dann, wenn der Behälter unbeabsichtigt umstürzt und sonst mit der Armatur auf eine Kante aufschlagen würde.

Nachfolgend wird anhand der beigefügten Zeichnungen näher auf ein Ausführungsbeispiel der Erfindung eingegangen. Es zeigen:
- Fig. 1: eine Draufsicht auf einen Behälter einer Wasserreinigungsanlage;

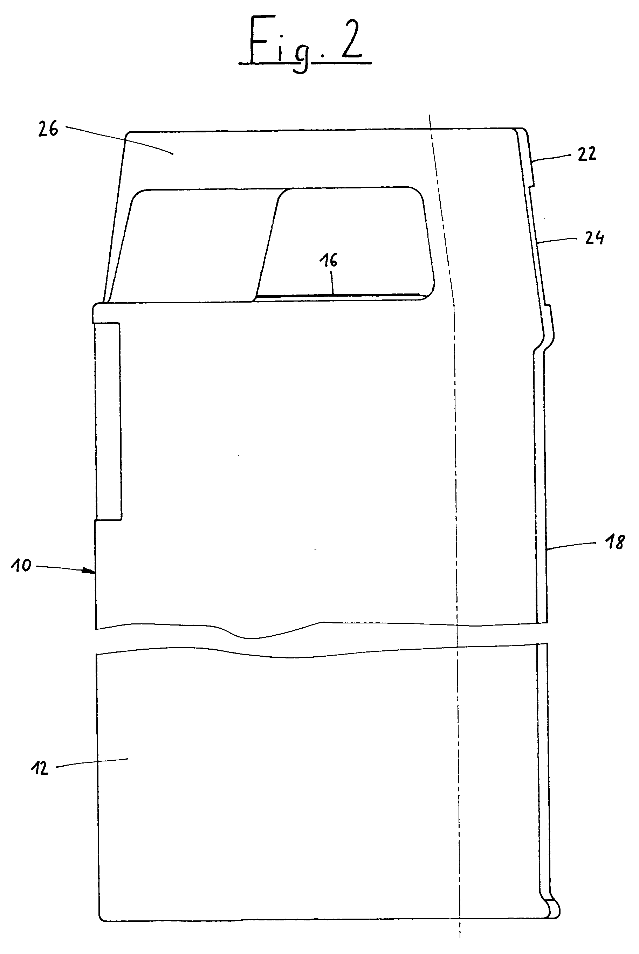

- Fig. 2: den Behälter nach Fig. 1 in Seitenansicht.

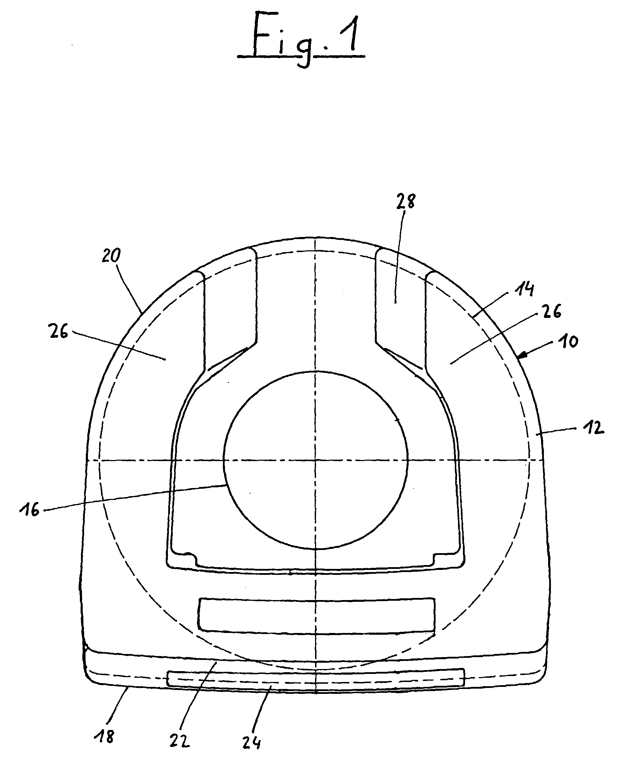

Fig. 1 zeigt einen Behälter 10 mit einem allseits von einer geschäumten Ummantelung 12 umgebenen zylindrischen Innenbehälter 14 (gestrichelt dargestellt). Der Behälter 10 wird über Schläuche (nicht gezeigt) an den Kreislauf einer Wasseraufbereitungsanlage angeschlossen. Die Schläuche münden in eine Armatur, die von oben auf eine Öffnung 16 des Behälters 10 aufgeschraubt ist. Der Innenbehälter 14 ist entsprechend bekannter Reinigungsstufen von Wasseraufbereitungsanlagen aufgebaut und ausgerüstet, die dem Fachmann bekannt sind und deswegen an dieser Stelle nicht näher erläutert werden sollen.

Die geschäumte Ummantelung 12 gliedert sich am Umfang in eine im wesentlichen planflächige Stirnwand 18 und einen im Querschnitt hufeisenförmigen Wandbereich 20, der den Innenbehälter im übrigen geschlossen umgibt. Die planflächige Stirnwand 18 ist nach oben als Rahmen 22 für eine Instrumententafel 24 verlängert. Der Rahmen 22 ist leicht nach hinten geneigt, um die Ablesbarkeit der Instrumententafel 24 zu verbessern.

Von den beiden oberen Eckkanten des Rahmens 22 ausgehend, besitzt der Behälter 10 zwei Griffe 26, die der Hufeisenform des Wandbereichs 20 folgen. Zwischen den beiden Griffen 26 ist eine Lücke 28 vorgesehen, durch welche die seitlich aus der Armatur austretenden Schläuche durchführbar sind. Die Griffe sind so ausgebildet, daß sie eine auf die Öffnung 16 aufgeschraubte Armatur umgeben und diese vor Schlageinwirkungen schützen.

## Patentansprüche

1. Behälter mit einem zylindrischen Innenbehälter (14), der eine wasserdurchflutete Reinigungsstufe einer Wasseraufbereitungsanlage enthält und von einer geschäumten Ummantelung (12) umgeben ist, **dadurch gekennzeichnet**, daß die Ummantelung (12) am Umfang eine im wesentlichen planflächige Stirnwand (18) besitzt und den Innenbehälter (14) im übrigen mit einer im Querschnitt im wesentlichen hufeisenförmigen Wandung (20) umschließt.

2. Behälter nach Anspruch 1, **dadurch gekennzeichnet**, daß die planflächige Stirnwand (18) nach oben verlängert ist und als Rahmen (22) für eine Instrumententafel (24) dient.

3. Behälter nach Anspruch 2, **dadurch gekennzeichnet**, daß der Rahmen (22) der Instrumententafel (24) leicht nach hinten geneigt ist.

4. Behälter nach einem der Ansprüche 1 bis 3, dadurch ge**kennzeichnet**, daß er im Bereich der Oberkante des Rahmens (22) einen dem Ummantelungsquerschnitt entsprechenden, im wesentlichen hufeisenformigen Griff (26) besitzt.

5. Behälter nach Anspruch 4, **dadurch gekennzeichnet**, daß der umlaufende Griff (26) an einer Stelle eine Lücke (28) zum seitlichen Durchführen von Schläuchen besitzt.

6. Behälter nach Anspruch 5, **dadurch gekennzeichnet**, daß die Schläuche an eine oben auf einer Öffnung (16) des Innenbehälters sitzende Armatur seitlich anschließbar sind, die von dem umlaufenden Griff (26) geschützt umgeben ist.
